# FASCICULE DE BREVET EUROPEEN

(11) **EP 0 844 553 B1**
(45) Date de publication et mention de la délivrance du brevet: **18.02.2004**
(21) Numéro de dépôt: 97203650.3
(22) Date de dépôt: 21.11.1997
(51) Int. Cl.: G06F 3/023

(54) **Dispositif électronique à écran comportant un menu susceptible d'être personnalisé par un utilisateur**
Elektronisches Gerät mit Anzeige mit einem vom Benutzer personalisierbaren Menü
Electronic device with screen comprising a user customisable menu

(30) Priorité: 26.11.1996 FR 9614474
(43) Date de publication de la demande: 27.05.1998
(73) Titulaire: Koninklijke Philips Electronics N.V., 5621 BA Eindhoven (NL)
(72) Inventeur: Charron, Didier, 75008 Paris (FR)
(74) Mandataire: Chaffraix, Jean

(56) Documents cités:
- EP-A- 0 322 332
- EP-A- 0 579 501
- EP-A- 0 607 731
- FR-A- 2 731 578
- GB-A- 2 162 393
- US-A- 5 201 067
- "REORGANIZATION MENU HIERARCHY TO BEST FIT THE INDIVIDUAL USER" IBM TECHNICAL DISCLOSURE BULLETIN, vol. 37, no. 2B, 1 février 1994, page 349/350 XP000433874
- "MENU METHOD" IBM TECHNICAL DISCLOSURE BULLETIN, vol. 32, no. 1, 1 juin 1989, page 452/453 XP000121571

## Description

L'invention concerne un appareil électronique à écran, comportant :
- une mémoire pour stocker un menu composé d'éléments de menu susceptible d'être configuré selon ses besoins par un utilisateur,
- un dispositif d'affichage pour afficher ledit menu à l'écran,
- un dispositif de personnalisation pour personnaliser l'affichage dudit menu incluant un dispositif d'affichage/masquage pour afficher/masquer sélectivement des éléments de menu.

Les appareils électroniques à écran actuels, notamment les téléphones fixes ou portables, offrent un choix de fonctions de plus en plus grand à l'utilisateur. Par exemple, de nombreux radiotéléphones proposent des fonctions de messagerie vocale, transfert d'appel, réglage de nombreux paramètres tels que le niveau sonore, le type de sonnerie, l'activation d'un signal lumineux pour indiquer la décharge de la batterie, etc.

Cependant, la plupart des utilisateurs de ces appareils n'utilisent fréquemment qu'un très petit nombre seulement de leurs fonctions. D'une part, parce qu'il n'ont pas besoin de toutes les fonctions proposées ou que l'effort à fournir pour étudier la documentation de l'appareil leur semble relativement important par rapport au bénéfice qu'ils en attendent, d'autre part, parce que le prix d'abonnement à certaines de ces fonctions est jugé excessif. Ainsi, de nombreux utilisateurs s'abonnent au minimum de fonctions nécessaires à leur utilisation personnelle bien qu'elles apparaissent toutes au menu de leur appareil. Par conséquent, ces menus standards se sont révélés inadaptés à une utilisation quotidienne et efficace pour la plupart des utilisateurs.

Des recherches ont donc été faites dans le but de faciliter l'utilisation des menus de ces appareils destinés à un large public.

Un système de menu définissable par l'utilisateur, appliqué à un téléphone cellulaire, est connu du brevet français publié sous le numéro 2731578. Il permet à l'utilisateur de créer son propre menu en sélectionnant dans un menu standard, les éléments dont il a le plus souvent besoin, pour les recopier dans un menu personnel. L'utilisateur pressé pourra donc accéder presque directement à la fonction qu'il recherche au moyen de son menu personnel.

Dans un mode de réalisation particulier, les éléments de menu les plus souvent utilisés sont automatiquement copiés du menu standard dans le menu personnel.

Un tel système de menu, bien qu'il propose à l'utilisateur un menu de taille réduite donc plus vite exploitable présente néanmoins des inconvénients.

La création du menu personnel prévoyant de réserver dans la mémoire de l'appareil la place nécessaire au stockage dudit menu, constitue un premier inconvénient. En effet ces éléments, recopiés du menu standard, sont redondants et augmentent la quantité de mémoire nécessaire à l'implantation du menu. or, la capacité de stockage des appareils de ce type étant limitée, la taille du menu personnel se trouve de ce fait également limitée. Enfin, et cela constitue un deuxième inconvénient, la programmation de ce menu personnel n'est pas aisée pour un public non expérimenté qui recherche avant tout une utilisation simple de son appareil. De plus, en cas de prêt de l'appareil, son propriétaire peut retrouver son menu personnel modifié, et devoir le reprogrammer.

Des appareils tels que celui mentionné dans le préambule sont également connus des documents suivants qui ne résolvent pas les inconvénients ci-dessus exposés. Le document EP-607 731 décrit en effet un procédé de personnalisation d'un menu consistant selon l'un des modes de réalisation à afficher uniquement les options les plus fréquemment utilisées. Pour cela, une modification automatique est réalisée en réponse au dépassement d'un seuil par un compteur comptabilisant le nombre de fois que l'option est sélectionnée. Le document EP-322 332 divulgue la personnalisation d'un menu au moyen d'un éditeur « customizer ». Le document GB-2 162 393 montre un limiteur destiné à n'afficher qu'une partie des options de menu disponibles. Le document FR 2 731 578 a trait à un radiotéléphone avec menu personnalisable. Le document « reorganization menu hierarchy to best fit the individual user » IBM Technical Disclosure Bulletin, vol.37, no.2B, 1 février 1994, pages 349/350 XP000433874 propose la creation automatique d'options de menu à accès rapide. Le document EP-579 501 évoque la modification d'un menu selon la fréquence d'usage des options. Le document « menu method » IBM Technical Disclosure Bulletin, vol.32, no.1, 1 juin 1989, pages 452/453 XP000121571 décrit un système où l'utilisateur peut choisir e sélectionner des éléments de menu au sein d'un groupe d'éléments sélectionnables. Enfin, le document US-5 201 067 concerne un radiotéléphone avec menu personnalisable.

Un objet de la présente invention est de remédier dans une large mesure à ces inconvénients et de prévoir un appareil électronique à écran, comportant un système de menu susceptible d'être configuré selon les besoins de l'utilisateur, économique en terme de place mémoire et dont la manipulation est simple et rapide.

Pour cela, un appareil du genre mentionné dans le préambule est caractérisé en ce que ledit dispositif de personnalisation inclut un dispositif 38 de verrouillage/déverrouillage permettant à l'utilisateur, en une seule opération, de valider/invalider et de mettre en position verrouillée/déverrouillée un paramètre d'un élément de menu en affectant un drapeau (y,n,Y,N) au dit paramètre, ledit dispositif 38 de verrouillage/déverrouillage coopérant avec le dispositif d'affichage/masquage pour afficher (resp. masquer) sélectivement les éléments de menu dont les paramètres sont mis en position « déverrouillée » (resp. « verrouillée »).

Selon une caractéristique importante de l'invention, un appareil du type mentionné ci-dessus, comportant de plus, un clavier muni d'un ensemble de touches, est remarquable en ce qu'il est prévu un premier mode d'utilisation dudit appareil, appelé mode manuel, dans lequel le dispositif de verrouillage/déverrouillage est commandé à partir d'au moins une touche dudit clavier.

Dans ce mode manuel, l'utilisateur configure lui-même le menu standard selon ses propres besoins à l'aide du clavier de son appareil.

Selon une autre caractéristique importante de l'invention, un appareil du type déjà mentionné est remarquable en ce qu'il est prévu un deuxième mode d'utilisation dudit appareil, appelé mode automatique, dans lequel un dispositif de comptage statistique du taux d'utilisation des éléments de menu coopère avec le dispositif de verrouillage/déverrouillage pour mettre automatiquement les paramètres desdits éléments de menu les plus (resp. moins) fréquemment utilisés en position "déverrouillé" (resp. "verrouillé").

Dans ce mode automatique, ledit menu est automatiquement configuré en fonction de la fréquence d'utilisation de chaque élément de menu. Ce dispositif de comptage peut avantageusement comporter des moyens de calcul utilisant une logique floue comme le décrit la demande de brevet français déposée le 6 mars 1996 par la demanderesse sous le numéro 9602813 et le brevet correspondant US-A-6 061 576. Ainsi, un appareil du type déjà mentionné est caractérisé en ce que le dispositif de comptage statistique comporte :
- des moyens de modélisation du comportement de l'utilisateur lorsqu'il parcourt le menu,
- des moyens d'adaptation dudit menu pour tenir compte dudit comportement.

Selon l'invention, le réglage d'un paramètre d'un élément du menu standard ainsi que la décision d'afficher ledit élément à l'écran sont effectués, en mode manuel, en une seule opération. En mode automatique, les éléments déjà paramétrés les moins souvent utilisés sont automatiquement supprimés à l'affichage du menu standard. Dans les deux modes, l'utilisateur dispose d'un menu raccourci, dans lequel il est plus facile de trouver la fonction qu'il utilise fréquemment. Ce système de menu permet également d'optimiser l'utilisation de la mémoire puisqu'on ne fait pas de recopies. Les éléments à afficher sont sélectionnés en fonction : des choix de l'utilisateur en mode manuel, de la fréquence d'utilisation de ces éléments en mode automatique. De plus, l'invention permet, de façon très avantageuse, de restreindre le nombre d'éléments du menu afin d'interdire l'accès de certaines fonctions à un utilisateur occasionnel ou bien l'empêcher de modifier les paramètres verrouillés.

La description suivante, faite en regard des dessins ci-annexés, le tout donné à titre d'exemple non limitatif fera bien comprendre comment l'invention peut être réalisée.

La figure 1 représente un exemple d'appareil électronique à écran selon l'invention.

La figure 2 représente une vue de face de l'appareil représenté à la figure 1.

La figure 3 représente :
- en A, un schéma synoptique illustrant un circuit de l'appareil représenté à la figure 1,
- en B, une table de données illustrant à un instant donné le contenu de la mémoire 32 faisant partie du circuit représenté en A.

Les figures 4 et 5 représentent un organigramme illustrant le fonctionnement du système de menu personnalisé, dans deux configurations différentes.

La figure 6 représente en A et B deux tables de données illustrant le contenu de la mémoire 32 à deux instants différents.

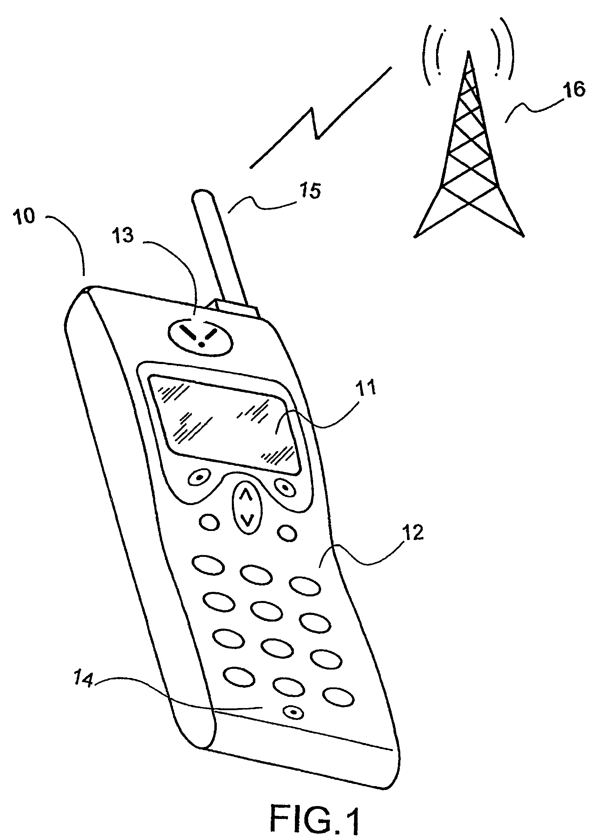

L'appareil électronique représenté à la figure 1 est un radiotéléphone, mais le système de menu personnalisé peut être appliqué à tout autre appareil électronique doté d'un processeur, d'une mémoire, d'un système d'affichage et d'un clavier.

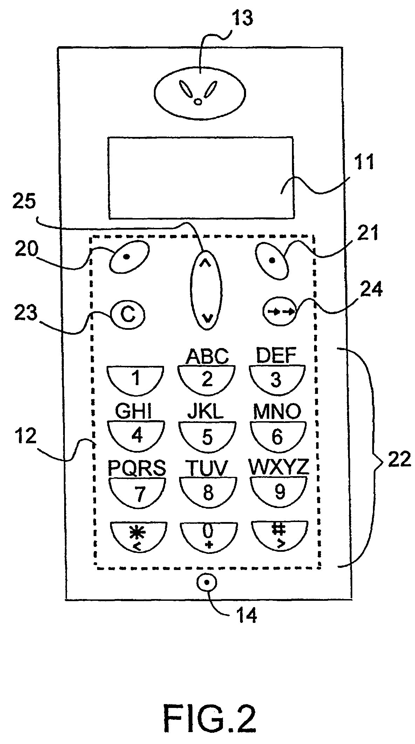

Le radiotéléphone représenté à la figure 1 comporte un boîtier 10 renfermant des circuits électroniques dont celui représenté à la figure 2, un écran 11, un clavier 12, un haut-parleur 13, un microphone 14, un dispositif d'émission/réception (non représenté) coopérant avec une antenne 15 pour échanger des signaux radioélectriques avec un site de base 16. Le clavier 12 comporte deux sortes de touches : des touches permanentes qui ont la même fonction quelque soit le contexte de menu dans lequel on se trouve et des touches contextuelles dont la fonction dépend de l'élément de menu affiché. Cette fonction est affichée à l'écran au dessus de la touche à actionner.

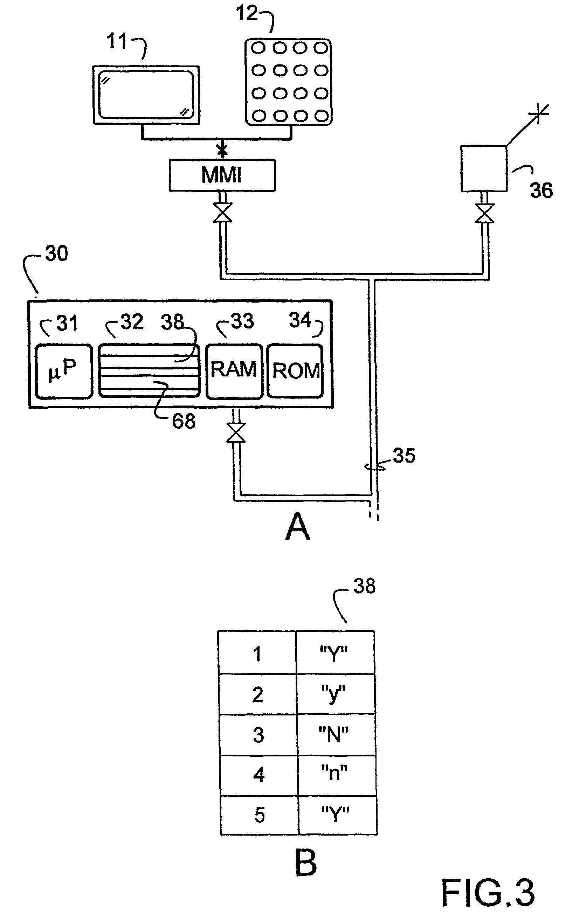

Dans un mode de réalisation préféré de l'invention représenté à la figure 2, le clavier 12 comporte deux touches contextuelles 20 et 21 dont l'une, 20 a trois fonctions et l'autre, 21 deux. La touche 20 permet selon le contexte d'accéder au menu par la fonction MENU, de sortir d'un programme par la fonction SORTIE et d'invalider un choix par la fonction NON. La touche 21 permet de sélectionner un élément de menu par la fonction OK et de valider un choix par la fonction OUI. Les autres touches sont permanentes. Outre des touches alphanumériques 22, une touche de correction 23 et une touche de recomposition automatique du dernier numéro appelé 24, le clavier comporte une touche de direction 25 (une flèche vers le haut et une flèche vers le bas) qui permet de faire défiler les éléments de menu à l'écran 11. Les touches contextuelles OK, OUI et NON permettent également d'actionner un dispositif de verrouillage/déverrouillage représenté à la figure 3 pour mettre en position "verrouillé" ou "déverrouillé" le paramètre de l'élément de menu préalablement sélectionné à l'aide de la touche OK.

La figure 3 montre le fonctionnement des dispositifs de verrouillage/déverrouillage et d'affichage/masquage. Du point de vue matériel, ces dispositifs utilisent les mêmes composants électroniques, ce qui explique qu'ils soient représentés en A par un seul schéma. Celui-ci montre comment coopèrent l'organe de commande 30 et l'interface homme/machine MMI (Man Machine Interface) composée de l'écran 11 et du clavier 12, pour mettre en oeuvre lesdits dispositifs de personnalisation du menu.

L'organe de commande 30 est composé d'un processeur 31, d'une mémoire morte programmable électriquement effaçable 32, de type EEPROM (Electricaly Erasable Programmable Read Only Memory), d'une mémoire vive à accès aléatoire 33 de type RAM (Random Access Memory) et d'une mémoire morte 34 de type ROM (Read Only Memory). Le programme principal de fonctionnement de l'appareil ainsi que les différents éléments de menu sont stockés en mémoire morte 34. La mémoire vive 33 est utilisée en parallèle avec la mémoire morte 34, pour positionner les variables utiles.

Les données paramétriques des éléments de menu sont stockés en EEPROM 32 pour être modifiées par l'utilisateur. Un réseau de bus 35 contient un bus d'interruptions pour transmettre les signaux du clavier 12 vers le processeur 31 et un bus série du type IIC (Inter Integrated Circuit) destiné aux signaux transitant entre le processeur 31, l'EEPROM 32 et l'écran 11. Le bus IIC dirige sélectivement les données venant du processeur 31 vers leur destinataire, EEPROM 32 ou écran 11, selon qu'elles doivent être mises en mémoire ou affichées. Par l'intermédiaire du réseau de bus de données 35, l'organe de commande 30 reçoit les signaux d'entrée du clavier 12 pour lire les données des différentes mémoires 32, 33 et 34, les afficher sur l'écran 11 et éventuellement écrire des données en EEPROM 32.

Un dispositif d'émission/réception 36 coopère avec les dispositifs précédemment décrits pour relier l'utilisateur au réseau de radiotéléphonie.

Les données de l'EEPROM 32, correspondant aux paramètres dès éléments de menu que l'utilisateur peut modifier sont stockées dans une table 38 représentée en B à la figure 3. Ces paramètres sont référencés dans la colonne de gauche à l'aide d'un numéro. Un drapeau pouvant prendre quatre valeurs est associé à chaque paramètre numéroté et est mis à jour dans la colonne de droite par le processeur 31 en fonction des informations qu'il reçoit du clavier 11. Chaque drapeau émet un signal destiné au processeur 31 pour déclencher le dispositif d'affichage/masquage. Les quatre valeurs de drapeaux disponibles correspondent aux quatre états dans lesquels l'utilisateur peut placer les paramètres des éléments de son menu. En B sur la figure 3 :
- "Y" représente l'état "valide/verrouillé",
- "N" représente l'état "invalide/verrouillé",
- "y" représente l'état "valide/déverrouillé",
- "n" représente l'état "invalide/déverrouillé".
Les drapeaux "y" et "n" émettent un signal pour afficher à l'écran 11, les paramètres auxquels ils sont affectés. Sur l'exemple représenté, seuls les paramètres des deuxième et quatrième lignes de la table 38 seront affichés à l'écran 11.

Le fonctionnement en mode manuel du dispositif de personnalisation pour paramétrer des éléments du menu va maintenant être décrit depuis l'entrée des données au clavier 12 jusqu'à leur affichage à l'écran 11 en référence aux figures 2 et 3. La description s'appuiera sur des exemples générant des écritures dans la table 38 de la mémoire 32.

Selon un mode de réalisation préféré de l'invention, une pression de certaines touches du clavier 11, (les touches 20 et 21 représentées à la figure 2) déclenche une temporisation, synchronisée sur l'horloge interne du processeur 31, qui permet audit processeur 31 d'évaluer le temps de pression de ladite touche 20 ou 21 et d'émettre le signal adéquat pour exécuter la routine correspondant à la commande du clavier 11.

Par exemple, une longue (resp. courte) pression de la touche contextuelle OUI (touche 21) du clavier 12 indique au processeur 31 qu'il doit affecter le drapeau "Y" (resp. "y") dans la table 38, au paramètre correspondant à celui affiché à l'écran 11, pour le mettre en position "verrouillé" (resp. "déverrouillé"). De même, une longue (resp. courte) pression de la touche NON (touche 20) lui indique qu'il doit affecter le drapeau "N" (resp. "n") dans la table 38, au paramètre correspondant à celui affiché à l'écran 11, pour le mettre en position "verrouillé" (resp. "déverrouillé").

Comme indiqué ci-dessus, l'organe 30 commande également le dispositif d'affichage/masquage coopérant avec le dispositif de verrouillage/déverrouillage par le bus de données IIC, pour masquer (resp. afficher) à l'écran 11, les éléments de menu dont les paramètres sont verrouillés (resp. déverrouillés), c'est-à-dire affectés des drapeaux "Y" ou "N" (resp. "y" ou "n").

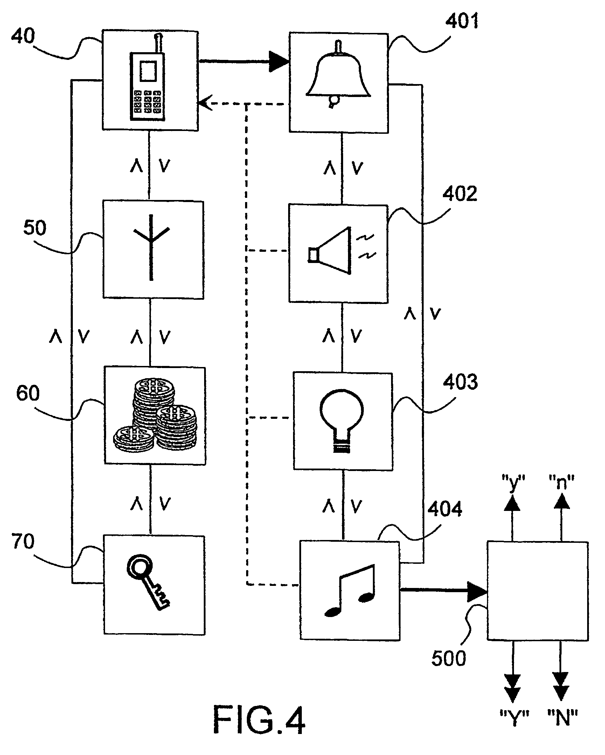

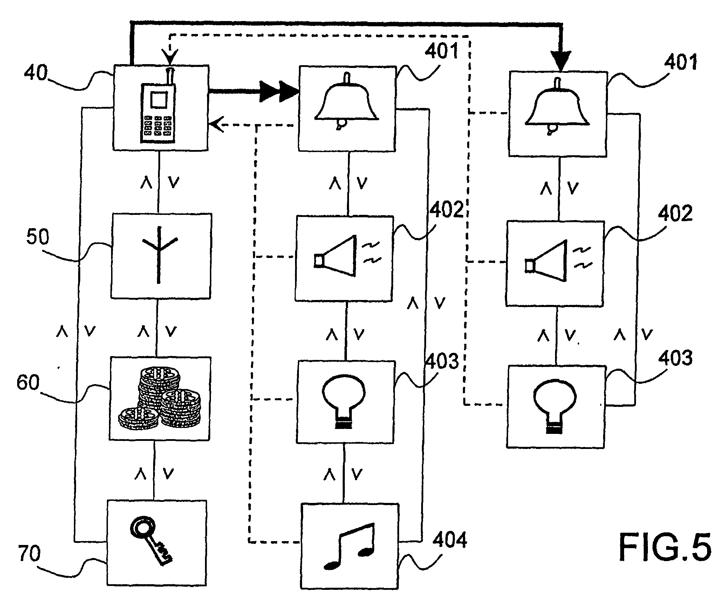

Les organigrammes des figures 4 et 5 illustrent sur un exemple de menu, le fonctionnement, en mode manuel, du dispositif de personnalisation.

L'exemple représenté à la figure 4 comporte des sous menus dont la liste des éléments est représentée par des pavés identifiés par des icônes symbolisant leur fonction. Les pavés 40, 50, 60, 70 et 80 désignent des sous menus comportant chacun plusieurs éléments à paramétrer. Le pavé 40 désigne le menu pour paramétrer les options de configuration de l'interface MMI. Le pavé 50 désigne le menu de choix du réseau de l'opérateur de radiotéléphonie. Le pavé 60 désigne le menu de contrôle d'appels permettant de visualiser des données statistiques, par exemple la durée moyenne d'un appel, etc. Le pavé 70 désigne le menu de sécurité permettant de limiter l'accès de son téléphone aux tiers, par exemple en exigeant un code secret pour passer des appels.

Les flèches ∧ et ∨ de part et d'autre des traits fin continus indiquent que le processeur 31 affiche de façon séquentielle les éléments du menu lorsque l'utilisateur actionne la touche de direction 25 représentée à la figure 2. Les flèches en gras indiquent que l'élément de menu représenté par le pavé pointé, est sélectionné par la touche contextuelle OK du clavier 12. Les flèches en trait interrompu indiquent que le processeur 31 peut à tout moment revenir à l'élément d'entête de sous menu par la touche contextuelle SORTIE.

Selon l'élément 401 à 404 du menu 40, sélectionné par la touche OK du clavier, l'utilisateur peut choisir le type de sonnerie de son appareil (401) ou son volume (402), illuminer les touches du clavier (403) ou les rendre sonores lorsqu'on les presse (404). Sur l'exemple de la figure 4, l'élément 404 a été sélectionné. Pour simplifier, on considère que cet élément n'a qu'un paramètre. Le processeur 31 affiche alors un écran de menu représenté par le pavé de décision 500 pour proposer à l'utilisateur quatre possibilités "y", "n", "Y" et "N" pour paramétrer l'élément 404, correspondant aux quatre valeurs de drapeaux disponibles dans la table 38. Le processeur 31 affecte le drapeau "y" (resp. "n") lorsque la touche contextuelle OUI (resp. NON) est actionnée par une pression courte (flèche à une pointe), et le drapeau "Y" (resp. "N") lorsque la touche contextuelle OUI (resp. NON) est actionnée par une pression longue (flèche à double pointe).

S'il modifie souvent le paramètre de l'élément 404, l'utilisateur peut trouver commode de ne pas le verrouiller pour que ledit élément reste toujours visible au menu de son appareil. Dans ce cas il effectue une pression courte de la touche contextuelle OUI (resp. NON) pour commander au processeur 31 d'affecter le drapeau "y" (resp. "n") au paramètre de l'élément 404 dans la table 38 pour rendre sonore (resp. silencieux) le clavier de son téléphone en position "déverrouillé". Le drapeau "y" (resp. "n") génère alors un signal pour commander au processeur 31 d'actionner le dispositif d'affichage/masquage pour que le paramètre de l'élément 404 soit affiché au menu.

En revanche, si l'utilisateur modifie rarement ce paramètre ou souhaite empêcher un tiers de le modifier il peut le verrouiller pour qu'il ne figure pas au menu de l'appareil. Il effectue alors une pression longue de la touche contextuelle OUI (resp. NON) pour commander au processeur 31 d'affecter audit paramètre le drapeau "Y" (resp. "N") qui génère alors un signal commandant au processeur 31 d'actionner le dispositif d'affichage/masquage pour que ledit paramètre ne soit pas affiché au menu.

La figure 5 détaille les opérations du processeur 31 pour faire réapparaître au menu l'élément 404 et éventuellement le déverrouiller. Pour cela, le sous menu 40, dans lequel se trouve l'élément verrouillé 404 doit être préalablement sélectionné à l'aide du clavier, puis une longue pression de la touche OK, représentée par une flèche à double pointe en trait gras, suivie de courtes pressions des touches de défilement commande au processeur 31 d'afficher de façon séquentielle tous les éléments du menu standard parmi lesquels figure l'élément recherché. Le processus permettant ensuite d'activer/désactiver en position verrouillé/déverrouillé ledit élément est identique à celui décrit en référence à la figure 4. En revanche, une courte pression de la touche OK, lorsqu'un sous menu est sélectionné, permet d'afficher uniquement les éléments non verrouillés.

Un mode de réalisation du dispositif de personnalisation du menu en mode automatique va maintenant être décrit.

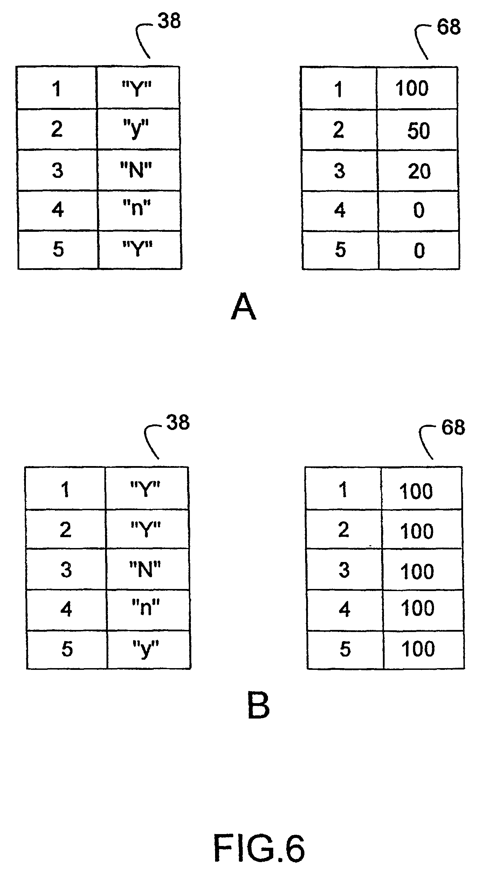

La figure 6 illustre le fonctionnement du dispositif de comptage statistique du taux d'utilisation des différents éléments de menu coopérant avec le dispositif de verrouillage/déverrouillage (illustré par la table 38 à la figure 3) pour mettre automatiquement les paramètres desdits éléments de menu les plus (resp. moins) fréquemment utilisés en position "déverrouillé" (resp. "verrouillé"). Les données de l'EEPROM 32 correspondant auxdits paramètres sont stockées dans une table 68 et référencées dans la colonne de gauche comme dans la table 38 représentée en B à la figure 3.

Un compteur est associé à chaque paramètre de la table 68, également référencé dans la table 38 sous le même numéro. Il est positionné en standard à une valeur initiale maximum lors de la première mise sous tension de l'appareil et est initialisé périodiquement par le processeur 31. Entre deux initialisations successives, la valeur du compteur diminue d'une unité sous l'action du processeur 31, chaque fois que celui-ci reçoit du clavier 12, une commande pour modifier dans la table 38 la valeur du drapeau symbolisant l'état du paramètre associé audit compteur.

La mise hors tension de l'appareil coupant l'alimentation du processeur arrête donc tous les mécanismes synchronisés sur son horloge. En particulier, les compteurs sont gelés jusqu'à la prochaine mise sous tension de l'appareil. Si la valeur du compteur ne s'annule pas entre deux initialisations, le processeur 31 place son paramètre en position "verrouillé", c'est-à-dire qu'il affecte dans la table 38, le drapeau "Y" à la place du drapeau "y" ou le drapeau "N" à la place du drapeau "n". En revanche, si la valeur du compteur devient nulle, le processeur 31 place le paramètre associé en position "déverrouillé" en affectant dans la table 38, le drapeau "y" à la place du drapeau "Y" et le drapeau "n" à la place du drapeau "N". Si le bon drapeau est déjà positionné, le processeur 31 ne fait rien. On peut envisager que la valeur maximum du compteur ainsi que sa période d'initialisation puissent être déterminées par l'utilisateur à l'aide de son clavier.

Comme en mode manuel, le dispositif d'affichage/masquage est également mis en oeuvre en mode automatique par le processeur 31 pour masquer à l'écran les paramètres verrouillés.

Le contenu des tables 38 et 68 est illustré à deux instants t1 et t2, respectivement en A et B, sur un exemple de cinq paramètres d'éléments de menu. L'horloge du processeur 31 constituant la référence temporelle, les instants t1 et t2 sont espacés d'un seul top d'horloge. Une initialisation des compteurs se produit à l'instant t2.

A l'instant t1, précédant juste ladite initialisation, les compteurs des trois premiers paramètres des tables 38 et 68 sont à une valeur non nulle tandis que ceux des deux derniers sont à zéro. Les trois premiers paramètres ont donc été moins souvent modifiés par l'utilisateur que les deux derniers.

A l'instant t2, tous les compteurs de la table 68 sont initialisés à la valeur maximum, prise égale à 100 dans l'exemple illustré à la figure. Le processeur 31 place donc le paramètre de la deuxième ligne de la table 38 dont le compteur indique de rares modifications, en position "verrouillé" ("Y" remplace "y"), et celui de la cinquième ligne dont le compteur indique des modifications fréquentes, en position "déverrouillé" ("y" remplace "Y"). En revanche, Il laisse les autres paramètres dans l'état qu'ils avaient à l'instant t1 qui correspond à leur fréquence réelle d'utilisation.

Ainsi, on a décrit un appareil électronique à écran comportant un menu destiné à être facilement personnalisé pour s'adapter à l'usage quotidien ou occasionnel de tous types d'utilisateurs.

Bien entendu, l'invention n'est pas limitée aux modes de réalisations qui viennent d'être décrits et représentés. D'autres variantes de réalisation de l'invention apparaîtront à l'homme ou la femme de l'art par exemple en ce qui concerne le fonctionnement du clavier, de l'affichage ou du dispositif de verrouillage/déverrouillage. En particulier, le dispositif de comptage statistique du taux d'utilisation des éléments de menu pour mettre en oeuvre le mode automatique peut être modifié pour prendre en compte d'autres données notamment concernant le comportement de l'utilisateur lorsqu'il parcourt le menu. Toutes ces variantes ne sortant pas du cadre de l'invention.

## Revendications

1. Appareil électronique à écran, comportant :
- une mémoire (34) pour stocker un menu composé d'éléments de menu susceptible d'être configuré selon ses besoins par un utilisateur,
- un dispositif d'affichage pour afficher ledit menu à l'écran (11),
- un dispositif de personnalisation pour personnaliser l'affichage dudit menu incluant un dispositif d'affichage/masquage pour afficher/masquer sélectivement des éléments de menu,
**caractérisé en ce que** ledit dispositif de personnalisation inclut un dispositif (38) de verrouillage/déverrouillage permettant à l'utilisateur, en une seule opération, de valider/invalider et de mettre en position verrouillée/déverrouillée un paramètre d'un élément de menu en affectant un drapeau (y,n,Y,N) au dit paramètre, ledit dispositif (38) de verrouillage/déverrouillage coopérant avec le dispositif d'affichage/masquage pour afficher (resp. masquer) sélectivement les éléments de menu dont les paramètres sont mis en position « déverrouillée » (resp. « verrouillée »).

2. Appareil selon la revendication 1, **caractérisé en ce qu'**il est prévu un mode automatique, dans lequel un dispositif (68) de comptage statistique du taux d'utilisation des éléments de menu coopère avec le dispositif (38) de verrouillage/déverrouillage pour mettre automatiquement les paramètres desdits éléments de menu les plus (resp. moins) fréquemment utilisés en position « déverrouillée » (resp. « verrouillée »).

3. Appareil selon la revendication 2, **caractérisée en ce que** le dispositif (38) de comptage statistique comporte :
- des moyens de modélisation du comportement de l'utilisateur lorsqu'il parcourt le menu,
- des moyens d'adaptation dudit menu pour tenir compte dudit comportement.

4. Appareil électronique à écran selon l'une des revendications 1 à 3, **caractérisé en ce que** ledit appareil est un radiotéléphone.

## Patentansprüche

1. Elektronisches Gerät mit Anzeige und:
- einem Speicher (34) zum Speichern eines Menüs bestehend aus Menüelementen, die den Bedürfnissen eines Benutzers entsprechend konfiguriert werden können,
- einer Anzeigevorrichtung zum Anzeigen des besagten Menüs auf dem Bildschirm (11),
- einer Vorrichtung zur Personalisierung, um die Anzeige des besagten Menüs zu personalisieren, einschließlich einer Arizeige/Maskierungs-Vorrichtung zum selektiven Auswählen/Maskieren der Menüelemente,
**dadurch gekennzeichnet, dass** die besagte Personalisierungsvorrichtung eine Vorrichtung (38) zum Sperren/Entsperren enthält, die dem Anwender in einem einzigen Vorgang das Bestätigen/Stornieren und das Einstellen eines Parameters eines Menüelements auf gesperrt/entsperrt ermöglicht, indem dem besagten Parameter ein Fähnchen (y,n,Y,N,) zugeordnet wird, wobei die besagte Vorrichtung (38) zum Sperren/Entsperren mit der Anzeige/Maskierungs-Vorrichtung zusammenarbeitet, um selektiv die Elemente des Menüs anzuzeigen (bez. zu maskieren), deren Parameter auf Position "entsperrt" (bez. "gesperrt") gesetzt sind.

2. Gerät nach Anspruch 1, **dadurch gekennzeichnet, dass** ein automatischer Modus vorgesehen ist, in dem eine statistische Zählvorrichtung (68) der Anwendungsquote der Menüelemente mit der Sperr/Entsperr-Vorrichtung (38) zusammenarbeitet, um automatisch die Parameter der besagten Menüelemente, die am meisten (bez. am wenigsten) verwendet werden, auf Position "entsperrt" (bez. "gesperrt") zu setzten.

3. Gerät nach Anspruch 1, **dadurch gekennzeichnet, dass** die statistische Zählvorrichtung (68) enthält:
- Verfahren zur Bildung eines Verhaltensmusters des Anwenders beim Durchgehen des Menüs,
- Verfahren zur Anpassung des besagten Menüs unter Berücksichtigung des besagten Verhaltens.

4. Elektronisches Gerät mit Anzeige nach einem der Ansprüche 1 bis 3, **dadurch gekennzeichnet, dass** das besagte Gerät ein Funktelefon ist.

## Claims

1. An electronic appliance with screen, comprising:
- a memory (34) for storing a menu formed by menu elements which can be configured by a user according to his needs,
- a display device for displaying said menu on the screen (11),
- a customization unit for customizing the display of said menu, including a display/masking device for selectively displaying/masking menu elements,
**characterized in that** said customization unit comprises:
a locking/unlocking device (38) permitting the user in a single operation to validate/invalidate and put in a locked/unlocked position a parameter of a menu element by assigning a flag (y, n, Y, N) to said parameter, said locking/unlocking device (38) cooperating with the display/masking device for selectively displaying (masking, respectively) the menu elements whose parameters are put in the <<unlocked>> position, <<locked>> position respectively.

2. The appliance as claimed in claim 1, **characterized in that** it has an automatic mode in which a statistical counting device (68) of the user rate of the elements of the menu cooperates with the locking/unlocking device (38) to automatically unlock (lock, respectively) the parameters of said menu elements which are used the most frequently (the least frequently, respectively).

3. An appliance as claimed in claim 2, **characterized in that** the statistical counting device (38) comprises:
- modeling means for modeling the behavior of the user when he passes through the menu,
- adaptation means for adapting said menu for taking said behavior into account.

4. An electronic appliance with screen as claimed in one of the claims 1 to 3, **characterized in that** said appliance is a radio telephone.
